# EUROPEAN PATENT APPLICATION

(11) **EP 4 398 078 A1**
(43) Date of publication of application: **10.07.2024**
(21) Application number: 23213808.1
(22) Date of filing: 01.12.2023
(51) Int. Cl.: G06F 3/01, G06F 3/023

(54) **EXTENDED REALITY USER INTERFACES FOR HAND-BASED INPUT**

(30) Priority: 03.01.2023 US 202318149289
(71) Applicant: Meta Platforms Technologies, LLC, Menlo Park, CA 94025 (US)
(72) Inventor: XU, Jiayang, Menlo Park (US)
(74) Representative: Murgitroyd & Company

(57) **Abstract**

In one embodiment, a method includes rendering, for one or more displays of an extended reality (XR) display device of a user, an XR user interface with one or more interactable elements positioned on a first hand of the user based on a first set of landmarks of the first hand; detecting one or more touchpoints by one or more digits of a second hand of the user on the XR user interface based on a projection of one or more of the digits on the second hand onto the first hand based on a second set of landmarks of the second hand, wherein the touchpoints are detected based on a distance between a distal end of the digits and the interactable elements being within a threshold value; and rendering a display window that provides an indication of the detected touchpoints with the interactable elements.

## Description

### TECHNICAL FIELD

This disclosure generally relates to databases and file management within network environments, and in particular relates to a dynamic user interfaces in an extended reality (XR) setting.

### BACKGROUND

Traditionally, a user in an extended reality (XR) experience may have a user interface (Ul), like a dashboard or keyboard, that a user can access while in the XR experience. The UI may appear as a 2D menu or window that is overlaid on a field of view of a user in the XR setting. The UI may be an air interface or may be rendered in a fixed position. However, the user may have a clumsy experience interacting with the air Ul, or an UI rendered onto the fixed position, like a table, in the XR environment. The user may mistype using the air UI due to lacking sense of reality and may be required to stay close to the fixed positions to provide user inputs, which may influence the immersive experience in the XR environment.

### SUMMARY

In particular embodiments, one or more computing systems may provide an extended reality (XR) user with an XR user interface for frictionless, controller-less input to an XR device. The one or more computing systems may enable users to provide inputs directly via the XR user interface to interact with the XR device. The one or more computing systems may render a dynamic XR user interface, such as a virtual keyboard or controller onto the user's first hand. Meanwhile, the user may use a second hand to interact with the XR user interface by selecting interactable elements such as characters, numbers, and symbols XR user interface via different input styles (e.g., typing mode, swiping mode). The one or more computing systems may map the XR user interface to the user's hand based on landmarks of the user's hand in real-time. The one or more computing systems may further render the XR user interface on the user's hand based on determining anchor points for the XR user interface. The one or more computing systems may map each anchor point to a landmark or coordinates calculated based on a matrix of a plurality of landmarks of the user's hand. The XR user interface may be rotatable and scalable in the XR environment. The one or more computing systems may project the XR user interface on a moving surface other than the user's hand based on mapping the anchor points of the XR user interface to landmarks of the moving surface. The one or more computing systems may divide the XR user interface into a plurality of sub-regions and render each sub-region on the movable surface according to a curvature of the moving surface.

According to a first aspect, there is provided a method comprising, by one or more computing systems: rendering, for one or more displays of an extended reality (XR) display device of a user, a XR user interface positioned on a first hand of the user, wherein the XR user interface is positioned based on a first set of landmarks of the first hand, and wherein the XR user interface comprises one or more interactable elements; detecting one or more touchpoints by one or more digits of a second hand of the user on the XR user interface rendered on the first hand, wherein the touchpoints are detected based on a projection of one or more of the digits on the second hand onto the first hand based on a second set of landmarks of the second hand, and wherein the touchpoints are detected based on a distance between a distal end of one or more of the digits and one or more of the interactable elements being within a threshold value; and rendering, for the one or more displays of the XR display device, a display window, wherein the display window provides an indication of the detected one or more touchpoints with the one or more interactable elements.

The XR user interface may be rotatable in response to a rotational motion of the first hand of the user.

The XR user interface may be scalable in response to one or more of: a multi-touch of the second hand of the user; or a translational motion of the first hand of the user.

The method may further comprise: determining a weight coefficient associated with a matrix of the first set of landmarks of the first hand; and mapping a plurality of anchor points of the XR user interface to a plurality of coordinates respectively based on the matrix of the first set of landmarks of the first hand and the weight coefficient.

The method may further comprise: determining a boundary of the XR user interface based on the plurality of anchor points; and rendering the one or more interactable elements within the boundary of the XR user interface based on a linear interpolation.

Detecting one or more touchpoints by one or more digits of the second hand of the user on the XR user interface rendered on the first hand may comprise: determining a point-to-point distance between the distal end of one or more of the digits and a center of each of the one or more interactable elements; and determining one of the touchpoints based on the point-to-point distance being within a point-to-point threshold value.

Detecting one or more touchpoints by one or more digits of the second hand of the user on the XR user interface rendered on the first hand may comprise: determining a point-to-plane distance between the distal end of one or more of the digits and a plane of the XR user interface; determining a first time associated with a first touchpoint of the one or more touchpoints, and a second time associated with a second touchpoint of the one or more touchpoints, wherein the point-to-plane distance being within a point-to-plane threshold value from the first time to the second time; and determining a trajectory of the second hand of the user on the one or more interactable elements based on the one or more touchpoints.

The method may further comprise: dividing the XR user interface into a plurality of sub-regions. Rendering the XR user interface on the first hand of the user may comprise rendering the plurality of sub-regions of the XR user interface on the first hand on the user based on a curvature of the first hand of the user.

Rendering the plurality of sub-regions of the XR user interface on the first hand on the user based on a curvature of the first hand of the user may comprise: dividing the first hand of the user into a plurality of hand sections according to the curvature of the first hand of the user; and rendering each of the plurality of sub-regions of the XR user interface on each of plurality of hand sections. Each of the plurality of sub-regions of the XR user interface may be positioned based on the first set of landmarks and additional landmarks associated with the each of the plurality of hand sections.

The method may further comprise: determining a skin deformation of the first hand of the user; and detecting the one or more touchpoints by the one or more digits of the second hand of the user on the XR user interface rendered on the first hand based on the skin deformation.

The XR user interface may be rendered as a 2-dimensional plane.

The XR user interface may comprise a plurality of modes. The plurality of modes may comprise one or more of a numeric keypad, a keyboard, a blank touchpad, a directional pad, or a game controller.

The method may further comprise: switching from a first mode of the plurality of modes to a second mode of the plurality of modes in response to receiving a user input.

The method may further comprise: determining an original text input based on the indication of the detected one or more touchpoints with the one or more interactable elements; and generating, by a language model, a suggested text input comprising one or more of an autocorrection of the original text input, or an autofill of the original text input.

The XR user interface may be positioned on a palm area of the first hand of the user.

According to a second aspect, there is provided one or more computer-readable storage media embodying software that is operable when executed to carry out the method of the first aspect. The media may be non-transitory.

According to a third aspect, there is provided an extended reality, XR, system comprising: one or more processors; and a memory coupled to the processors comprising instructions executable by the processors, the processors operable when executing the instructions to carry out the method of the first aspect. The memory may be non-transitory.

According to a fourth aspect, there is provided a computer program product comprising instructions which, when the program is executed by one or more processors of an extended reality, XR, system, cause the XR system to carry out the method of the first aspect.

Certain technical challenges exist for providing an XR user with an XR user interface for frictionless, controller-less input to an XR device. One technical challenge may include rendering a dynamic XR user interface on a moving three-dimensional (3D) object (e.g., user's hand). The solution presented by the embodiments disclosed herein to address this challenge may be rendering the XR user interface that includes one or more interactable elements on the user's first hand based on a first set of landmarks of the first hand. As such, the first set of landmarks may be used for mapping a plurality of anchor points of the XR user interface according to a weight coefficient associated with a matrix of the first set of landmarks of the first hand. Another technical challenge may include detecting user interactions with the XR user interface. The solution presented by the embodiments disclosed herein to address this challenge may be detecting one or more touchpoints by one or more digits of a second hand of the user on the XR user interface based on a projection of one or more of the digits on the second hand onto the first hand based on a second set of landmarks of the second hand. The touchpoints may be detected based on a distance between a distal end of the digits and the interactable elements within a threshold value.

Certain embodiments disclosed herein may provide one or more technical advantages. A technical advantage of the embodiments may include enriching the user experience in the XR environment allowing the user to provide inputs more intuitively and to get tactile feedback when providing inputs on the XR user interface. Another technical advantage of the embodiments may include increasing user interface flexibility by rendering the XR user interface onto a moving object that follows the user's movement while in the XR environment. Certain embodiments disclosed herein may provide none, some, or all of the above technical advantages. One or more other technical advantages may be readily apparent to one skilled in the art in view of the figures, descriptions, and claims of the present disclosure.

The embodiments disclosed herein are only examples, and the scope of this disclosure is not limited to them. Particular embodiments may include all, some, or none of the components, elements, features, functions, operations, or steps of the embodiments disclosed herein. Embodiments according to the invention are in particular disclosed in the attached claims directed to a method, a storage medium, a system and a computer program product, wherein any feature mentioned in one claim category, e.g., method, can be claimed in another claim category, e.g., system, as well. The dependencies or references back in the attached claims are chosen for formal reasons only. However any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

FIG. 1A illustrates an example virtual reality system worn by a user.
FIG. 1B illustrates an example augmented reality system.
FIG. 2 illustrates an example method for providing an extended reality (XR) user interface for frictionless input.
FIG. 3 illustrates an example method for rendering the XR user interface based on the first set of landmarks of the first hand.
FIG. 4 illustrates an example scenario of rendering the XR user interface in the XR environment for the user to interact with.
FIG. 5 illustrates an example scenario of the user interacting with the XR user interface using keystroke input mode.
FIG. 6 illustrates an example scenario of the user interacting with the XR user interface using swipe-to-text input mode.
FIG. 7 illustrates an example network environment associated with a social-networking system.
FIG. 8 illustrates an example computer system.

### DETAILED DESCRIPTION

### Extended Reality User Interfaces for Hand-based Input

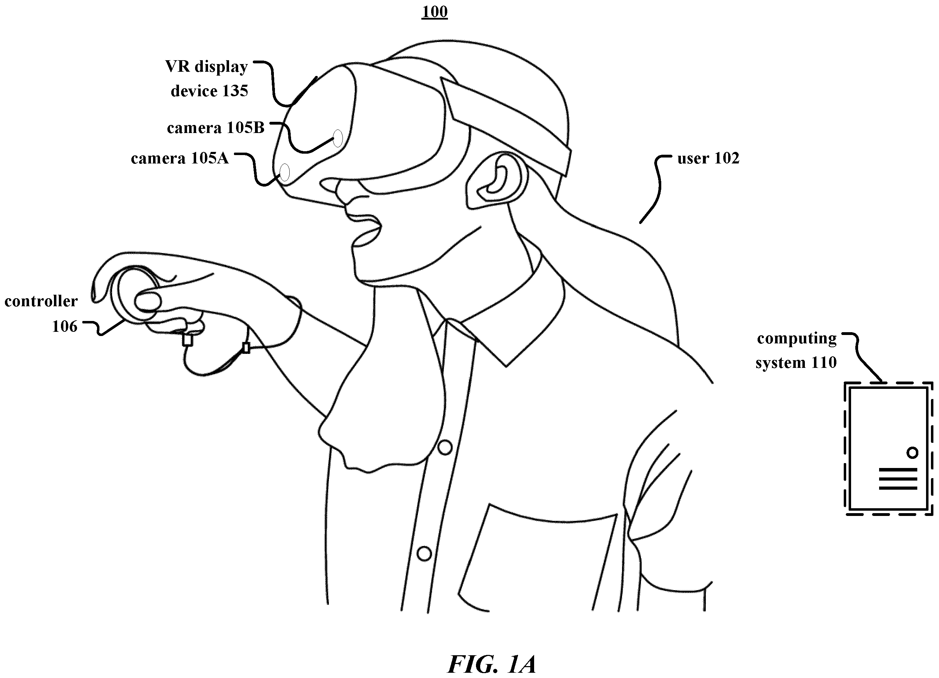

**FIG. 1A** illustrates an example of a virtual reality system 100 worn by a user 102. In particular examples, the virtual reality system 100 may comprise a head-mounted VR display device 135, a controller 106, and one or more computing systems 110. The VR display device 135 may be worn over the user's eyes and provide visual content to the user 102 through internal displays (not shown). The VR display device 135 may have two separate internal displays, one for each eye of the user 102 (single display devices are also possible). In particular examples, the VR display device 135 may comprise one or more external-facing cameras, such as the two forward-facing cameras 105A and 105B, which can capture images and videos of the real-world environment. As illustrated in FIG. 1A, the VR display device 135 may completely cover the user's field of view. By being the exclusive provider of visual information to the user 102, the VR display device 135 achieves the goal of providing an immersive artificial-reality experience. One consequence of this, however, is that the user 102 may not be able to see the physical (real-world) environment surrounding the user 102, as their vision is shielded by the VR display device 135. As such, the passthrough feature described herein may be technically advantageous for providing the user with real-time visual information about their physical surroundings.

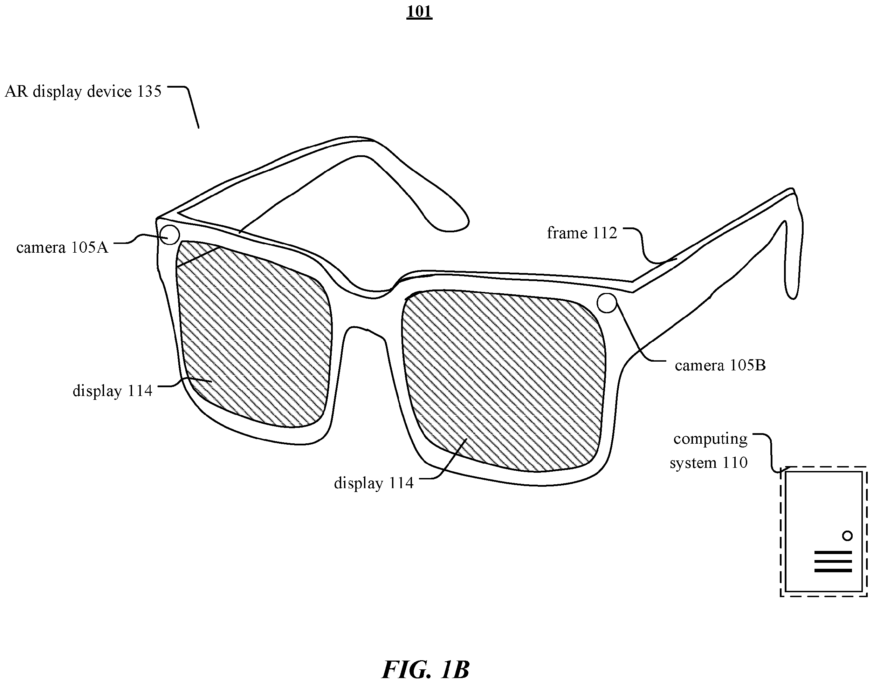

**FIG. 1B** illustrates an example augmented reality (AR) system 101. The augmented reality system 101 may include a head-mounted display AR display device 135 comprising a frame 112, one or more displays 114, and one or more computing systems 110. The AR display device 135 may be worn over the user's eyes (e.g., like eyeglasses) and provide visual content to a user 102 (not shown) through displays 114. The displays 114 may be transparent or translucent allowing a user wearing the AR display device 135 to look through the displays 114 to see the real-world environment and displaying visual artificial reality content to the user at the same time. The AR display device 135 may include an audio device that may provide audio artificial reality content to users. The AR display device 135 may include one or more external-facing cameras, such as the two forward-facing cameras 105A and 105B, which can capture images and videos of the real-world environment. The AR display device 135 may include an eye tracking system to track the vergence movement of the user wearing the AR display device 135. The augmented reality system 101 may further include a controller 106 (not shown) comprising a trackpad and one or more buttons. The controller 106 may receive inputs from users and relay the inputs to the computing system 110. The controller 106 may also provide haptic feedback to users. The computing system 110 may be connected to the AR display device 135 and the controller through cables or wireless connections. The computing system 110 may control the AR display device 135 and the controller to provide the augmented reality content to and receive inputs from users. The computing system 110 may be a standalone host computer system, an on-board computer system integrated with the AR display device 135, a mobile computing device, or any other hardware platform capable of providing artificial reality content to and receiving inputs from users.

In particular examples, the computing system 110 may provide an XR user with an XR user interface rendered on the user's hand for frictionless, controller-less input to an XR device. For some XR devices, such as smart glasses (e.g., AR/VR display device 135), voice input may be the primary modality used to interact with the XR devices. However, there are situations where voice input is not optimal or desirable. For example, the user may want to keep the interaction with their AR glasses private while in a public area. In another example, the user may not want other users to hear them using the VR headset in a multiplayer VR game (e.g., because they are sneaking up on someone in a first-person shooter game). Therefore, enabling users to provide inputs directly via an XR user interface to interact with the XR device may be desirable. Rendering virtual user interfaces in fixed positions (e.g., a table surface) may lead to clumsy user experiences. For example, in VR, the system may render a virtual keyboard in front of the user, and keys need to be selected one at a time by ray casting from a controller. In another example, in AR, the system may render an AR keyboard on a table or other flat surface, but this requires the user to find a suitable flat surface and not move away from that surface. To address the challenges noted above, one solution may be to use a dynamic XR user interface, such as a virtual keyboard or controller, that is projected onto the user's first hand. Meanwhile, the user's second hand may be used to interact with the XR user interface by selecting characters, numbers, and symbols on the dynamic XR user interface via touch type. The dynamic XR user interface may provide the user with tactile feedback when providing input on the XR user interface (e.g., by feeling their digits touching the virtual keyboard on the other hand). The dynamic XR user interface may accept various input modes to provide a seamless user experience of using the interface in the XR environment (e.g., allowing both keystrokes and swipe-to-text on a virtual keyboard). Furthermore, the XR user interface may be applicable not only to AR devices, but also to VR devices for any application that requires a user to input text or makes other types of controller-based selections. As an example and not by way of limitation, in a VR experience, the VR system may render a virtual keyboard onto a user's palm to allow text input when the user is in a passthrough mode. Additionally or alternatively, the XR user interface may be projected on movable surfaces other than the user's hand palm based on mapping anchor points of the XR user interface to landmarks on the movable surfaces. Vision-based hand tracking techniques may be used for modeling the positions and movements of the user's hands. Such techniques may use a vision-based hand tracking model to model a set of skeleton-based landmarks on a user's hand and to track each landmark individually. However, while tracking all the landmarks may increase the accuracy of hand tracking, it may not be optimal for modeling the desired shape of the XR user interface. As an example and not by way of limitation, the computing system 110 may map the XR user interface to the user's hand based on the landmarks surrounding the hand palm area in real-time. Providing the dynamic XR user interface may allow a user device (e.g., HMD) to track the user's hand and render the XR user interface to stay with the user's hand. Thus the user 102 may provide inputs more intuitively in the XR environment. As an example and not by way of limitation, one approach for rendering the XR user interface on the user's hand may require determining anchor points for the XR user interface. The computing system 110 may map each anchor point to a landmark or coordinates calculated based on a matrix of a plurality of landmarks of the user's hand. Although this disclosure describes providing an XR user with an XR user interface for frictionless, controller-less input to the XR device in a particular manner, this disclosure contemplates providing the XR user with the XR user interface for frictionless, controller-less input to the XR device in any suitable manner.

In particular examples, the computing system 110 may render, for one or more displays of an extended reality (XR) display device of a user 102, an XR user interface positioned on a first hand of the user, wherein the XR user interface is positioned based on a first set of landmarks of the first hand, and wherein the XR user interface comprises one or more interactable elements. The computing system 110 may determine a weight coefficient associated with a matrix of the first set of landmarks of the first hand. The computing system 110 may then map a plurality of anchor points of the XR user interface respectively to a plurality of coordinates based on the matrix of the first set of landmarks of the first hand and the weight coefficient. As an example and not by way of limitation, the weight coefficient may be a vector *W*[w₀, w_{1,} ... , wₙ] that comprises a plurality of values, each associated with the first set of n landmarks of the first hand of the user. The matrix of the first set of landmarks of the first hand may indicate the positions of the n landmarks in the XR environment, where the matrix may be an n×3-matrix *L*[L₀ (x₀, y_{0,} z₀); L₁ (x₁, y₁, z₁); ...; Lₙ (xₙ, yₙ, zₙ)]. The coordinates of each of the anchor points of the XR user interface may relate to one or more of the n landmarks. The value of n may be n=21 to outline a skeleton structure of the hand. The twenty-one landmarks may represent wrist, thumb carpometacarpal (CMC) joint, thumb metacarpophalangeal (MCP) joint, thumb interphalangeal (IP)joint, thumb tip, index finger MCP joint, index finger proximal interphalangeal (PIP) joint, index finger distal interphalangeal (DIP) joint, index finger tip, middle finger MCP joint, middle finger PIP joint, middle finger DIP joint, middle finger tip, ring finger MCP joint, ring finger PIP joint, ring finger DIP joint, ring finger tip, pinky MCP joint, pinky PIP joint, pinky DIP joint, and pinky tip, respectively. As an example and not by way of limitation, a first anchor point of the XR user interface may be determined by L₀ (x₀, y₀, z₀), L₁ (x₁, y₁, z₁), and L₅ (x₅, y₅, z₅); and a second anchor point of the XR user interface may be determined by L₃ (x₃, y₃, z₃), L₅ (x₅, y₅, z₅), L₁₁ (x₁₁, y₁₁, z₁₁), and L₁₄ (x₁₄, y₁₄, z₁₄). The computing system 110 may map the first anchor point of the hexagon XR user interface to the coordinates calculated by w₀× L₀ (x₀, y₀, z₀) + w₁× L₁ (x₁, y₁, z₁) + w₅× L₅ (x₅, y₅, z₅); and map the second anchor point of the hexagon XR user interface to the coordinates calculated by w₃^{'}× L₃ (x₃, y₃, z₃) + w₅^{'}× L₅ (x₅, y_{5,} z₅)+ w₁₁^{'}× L₁₁ (x₁₁, y_{11,} z₁₁) + w₁₄^{'}× L₁₄ (x₁₄, y₁₄, z₁₄). For example, the computing system 110 may determine a first weight coefficient *W*[w₀, w₁, ..., wₙ] to calculate the coordinates of the first anchor point of the XR user interface. In the meantime, the computing system 110 may determine a second weight coefficient *W'*[w₀', w₁'_{,} ..., wₙ'] to calculate the coordinates of the second anchor point of the XR user interface. The computing system 110 may perform calculations for the rest coordinates for mapping the rest of the anchor points of the XR user interface in a similar manner.

In particular examples, the computing system 110 may then determine a boundary of the XR user interface based on the plurality of anchor points. The computing system 110 may render the one or more interactable elements within the boundary of the XR user interface based on a linear interpolation. As an example and not by way of limitation, the XR user interface may have six anchor points of a hexagon plane around the XR user interface. As an example and not by way of limitation, the XR user interface may have four anchor points of a rectangular plane around the XR user interface. The computing system 110 may use the hexagon plane as the boundary for rendering the XR user interface on the user's first hand. The computing system 110 may then render the one or more interactable elements within the hexagon plane of the XR user interface based on the linear interpolation. As an example and not by way of limitation, the XR user interface may be a calculator. The one or more interactable elements of the calculator may be numerals 0-9, and mathematical operators. The computing system 110 may then render the numeral number 0-9 and the mathematical operators based on a linear interpolation within the rectangular boundary based on four anchor points (e.g., corners of the rectangle).

In particular examples, the computing system 110 may divide the XR user interface into a plurality of sub-regions. The computing system 110 may then render the plurality of sub-regions of the XR user interface on the first hand of the user based on a curvature of the first hand of the user. The computing system 110 may further divide the first hand of the user into a plurality of hand sections according to the curvature of the first hand of the user. The computing system 110 may render each of the plurality of sub-regions of the XR user interface on each of plurality of hand sections, wherein each of the plurality of sub-regions of the XR user interface is positioned based on the first set of landmarks and additional landmarks associated with the each of the plurality of hand sections. As an example and not by way of limitation, rendering the XR user interface as a whole may adopt a portion of the n (e.g., n=21) landmarks that includes position information of L₀, L₁, L₅, L₉, L₃, L₁₇ around the palm area of the first hand. Each of the sub-regions of the XR user interface is positioned based not only on L₀, L₁, L₅, L₉, L₅, and L₁₇ around the palm area, but also on additional landmarks L₆ and L₁₈ near the thenar section and the hypothenar section.

In particular examples, the XR user interface may be a two-dimensional (2D) plane. As an example and not by way of limitation, the computing system 110 may render the XR user interface in a rectangular shape, a hexagon shape, or a two-dimensional plane that fits the user's first hand. In particular examples, the computing system 110 may render a 2D plane onto a 3D object surface based on mapping anchor points of the 2D plane to landmarks of the 3D object in the XR environment. Additionally or alternatively, the system may divide the XR user interface into sub-regions and render each of the sub-regions separately across a curved 3D surface. Although this disclosure describes rendering the XR user interface in a particular manner, this disclosure contemplates rendering the XR user interface in any suitable manner.

In particular examples, the computing system 110 may detect one or more touchpoints by one or more digits of a second hand of the user on the XR user interface rendered on the first hand, wherein the touchpoints are detected based on a projection of one or more of the digits on the second hand onto the first hand based on a second set of landmarks of the second hand, and wherein the touchpoints are detected based on a distance between a distal end of one or more of the digits and one or more of the interactable elements being within a threshold value. As an example and not by way of limitation, the user may use multiple digits of the second hand to interact with the XR user interface. The computing system 110 may project the second hand of the user in the XR environment and track the second hand based on the second set of landmarks of the second hand. The second set of landmarks may comprise m landmarks (e.g., m=21). The computing system 110 may adopt five landmarks representing distal ends of the digits of the m landmark for detecting the one or more touchpoints. The computing system 110 may determine a distance between the distal end of the one or more digits and the XR use interface. The computing system 110 may then determine one or more touchpoints based on the distance within a threshold value. The one or more touchpoints may comprise keystrokes on the one or more interactable elements and/or one or more trajectories that passes by the one or more interactable elements of the XR user interface.

In particular examples, the computing system 110 may determine a point-to-point distance between the distal end of one or more of the digits and a center of each of the one or more interactable elements. The computing system 110 may then determine one of the touchpoints based on the point-to-point distance being within a point-to-point threshold value. As an example and not by way of limitation, the computing system 110 may obtain the location coordinates of the distal end of one or more of the digits and the center of each of the one or more interactable elements in the XR environment. The computing system 110 may determine the point-to-point distance between the distal end of one or more of the digits and the center of each of the one or more interactable elements based on the location coordinates in the XR environment. As an example and not by way of limitation, the computing system 110 may calculate the point-to-point distance between a particular distal end (e.g., index tip) of the second hand and each of the one or more of the interactable elements of the XR user interface. The computing system 110 may register a touchpoint associated with a particular interactable element when the point-to-point distance between the particular distal end of the second hand and the center of the particular interactable element of the XR user interface is within a point-to-point threshold value. As another example and not by way of limitation, the computing system 110 may calculate the point-to-point distance between each of the distal ends of the second hand and each of the one or more of the interactable elements of the XR user interface. The computing system 110 may register one or more touchpoints associated with one or more interactable elements when the point-to-point distance between each of the distal ends of the second hand and the center of each of the one or more of the interactable elements of the XR user interface is within the point-to-point threshold value.

In particular examples, the computing system 110 may determine a point-to-plane distance between the distal end of one or more of the digits and a plane of the XR user interface. The computing system 110 may determine a first time associated with a first touchpoint of the one or more touchpoints and a second time associated with a second touchpoint of the one or more touchpoints, wherein the point-to-plane distance being within a point-to-plane threshold value from the first time to the second time. The computing system 110 may then determine a trajectory of the second hand of the user on the one or more interactable elements based on the one or more touchpoints. As an example and not by way of limitation, the computing system 110 may obtain the location coordinates of a distal end (e.g., index finger tip) of the second hand and the position of the XR user interface plane in the XR environment based on the location coordinates of the plurality of the anchor points of the XR user interface. The computing system 110 may then calculate the point-to-plane distance based on the coordinates of the distal end and the anchor points of the XR user interface. The computing system 110 may determine the first touchpoint associated with the first time based on the point-to-plane distance between the distal end of the second hand and the XR user interface being within the point-to-plane threshold value. The computing system 110 may then determine a second touchpoint associated with a second time. The computing system 110 may further determine that the point-to-plane distance between the distal end of the second hand and the XR user interface remains within the point-to-plane threshold value from the first time to the second time. The computing system 110 may determine the trajectory of the second hand of the user on the one or more interactable elements from the first time to the second time. The starting point of the trajectory may be the first touchpoint and the finishing point of the trajectory may be the second touchpoint.

In particular examples, the computing system 110 may automatically calculate the point-to-point distance between the distal end of one or more of the digits and the center of each of the one or more interactable elements and the point-to-plane distance between the distal end of one or more of the digits and the plane of the XR user interface at the same time. In particular examples, the computing system 110 may determine one of the point-to-point distance and the point-to-plane distance according to the input mode that the user may select before entering texts. The computing system 110 may automatically detect the input mode and determine to calculate the point-to-point distance or the point-to-plane distance according to the detected input mode. The computing system 110 may predetermine the point-to-point threshold value and the point-to-plane threshold value to be the same. Additionally or alternatively, the computing system 110 may set different values for the point-to-point threshold value and the point-to-plane threshold value.

In particular examples, the computing system 110 may determine a skin deformation of the first hand of the user. The computing system 110 may then detect the one or more touchpoints by the one or more digits of the second hand of the user on the XR user interface rendered on the first hand based on the skin deformation. As an example not by way of limitation, a location of the skin deformation may be associated with one of the one or more interactable elements linearly interpolated within the XR user interface. The computing system 110 may then detect the one or more touchpoints by the one or more digits of the second hand of the user on the XR user interface rendered on the first hand based on the location of the skin deformation in the XR environment. Although this disclosure describes detecting one or more touchpoints by one or more digits of a second hand of the user on the XR user interface rendered on the first hand in a particular manner, this disclosure contemplates detecting one or more touchpoints by one or more digits of a second hand of the user on the XR user interface rendered on the first hand in any suitable manner.

In particular examples, the computing system 110 may render, for the one or more displays of the XR display device, a display window, wherein the display window provides an indication of the detected one or more touchpoints with the one or more interactable elements. As an example and not by way of limitation, the display window may look the same as the XR user interface and the display window may hover side by side with the XR user interface. As another example and not by way of limitation, the display window may be a flat enlarged plane showing the interactable elements of the XR user interface. The computing system 110 may render the display window at a corner of the XR environment from the user's perspective. The user may move the display window to other positions in the XR environment according to user's preference. The indication may mark a particular interactable element. Additionally or alternatively, the indication may be a trajectory that indicate the user's interaction with the XR user interface. The display window may provide the indication in real-time while the user is typing/swiping. In particular examples, the computing system 110 may determine an original text input based on the indication of the detected one or more touchpoints with the one or more interactable elements. The computing system 110 may use a language model to generate a suggested text input comprising one or more of an autocorrection of the original text input, or an autofill of the original text input. As an example and not by way of limitation, the computing system 110 may use a language model to generate a suggest word, a suggested phrase, or a suggested sentence. The computing system 110 may render a secondary display window to show the suggested text input. Although this disclosure describes rendering the display window to provide an indication of the detected one or more touchpoints with the one or more interactable elements in a particular manner, this disclosure contemplates rendering the display window to provide an indication of the detected one or more touchpoints with the one or more interactable elements in any suitable manner.

In particular examples, the XR user interface may be rotatable in response to a rotational motion of the first hand of the user. As an example and not by way of limitation, the user may move the first hand in the XR environment. The motions may comprise translational motions and rotational motions. The XR user interface may attach to the user's first hand and move accordingly based on the movement of the user's first hand. As an example and not by way of limitation, the user may rotate the first hand by 90 degrees from a vertical position to a horizontal position, and the XR user interface may rotate 90 degrees along with the first hand from the vertical position to the horizontal position. The computing system 110 may render the XR interface in time with the rotational motion of the first hand of the user.

In particular examples, the XR user interface may be scalable in response to one or more of a multi-touch of the second hand of the user or a translational motion of the first hand of the user. As an example and not by way of limitation, the XR user interface is scalable as the user may move the first hand closer or further to the user while in the XR environment. The computing system 110 may render the XR interface in a different size when the user moves the first hand closer or further to the user. Additionally or alternatively, the XR interface may be scalable in response to a multi-touch of the second hand of the user. As an example and not by way of limitation, the user may use one or more digits of the second hand to enlarge or reduce the size of the XR user interface. The computing system 110 may detect the multi-touch of the user using the one or more digits of the second hand and render the XR user interface with a different size associated with a movement of the one or more digits of the second hand. As an example and not by way of limitation, the user may put one finger on a corner of the XR user interface to scale the XR user interface. Additionally or alternatively, the user may move multiple digits of the second hand on a plane of the XR user interface to scale the XR user interface.

In particular examples, the XR user interface may comprise a plurality of modes. The plurality of modes may comprise one or more of a numeric keypad, a keyboard, a blank touchpad, a directional pad, or a game controller. The user may switch from a first mode of the plurality of modes to a second mode of the plurality of modes in response to receiving a user input. The user input may comprise one or more of an audio input, a gesture input, or a text input. As an example and not by way of limitation, the user may swipe up and down or left to the right to switch from a first mode of the plurality of modes to a second mode of the plurality of modes. As an example and not by way of limitation, the user may interact with the one or more interactable elements to switch modes. One particular interactable element of the one or more interactable elements may be configured to perform switching modes so that the user may touch the particular interactable element to switch between modes. Additionally or alternatively, the XR user interface may display all available modes when the user touches the particular interactable element, and the user may select a desired mode of all the available modes.

In particular examples, the computing system 110 may render the XR interface onto the palm area and render additional interactable elements onto the other landmarks outside the palm area (e.g., digit landmarks) of the user's first hand to enhance the user experience. As an example and not by way of limitation, the computing system 110 may project a shift key onto the pinky tip landmark; and a backspace key onto the index fingertip landmark. As an example and not by way of limitation, the computing system 110 may project a switch key onto the middle fingertip landmark so that the user may switch between different XR user interfaces freely by tapping on the switch key rendered on the middle fingertip (e.g., to switch between a QWERTY keyboard and a numerical pad).

In particular examples, the computing system 110 may automatically activate the XR user interface when launching an application of the XR device. As an example and not by way of limitation, the computing system 110 may invoke a numerical keyboard while launching a calculator application. Additionally or alternatively, the computing system 110 may invoke the XR user interface in response to a user input. The user input may comprise pressing a physical button of the XR device, touching a virtual button rendered in the XR environment, providing a speech input, or providing a hand gesture. The hand gesture may be a predetermined gesture by default in factory settings of the XR device or may be customizable based on the user's preferences. As an example and not by way of limitation, the hand gesture may comprise touching the thumb to the index finger or an open hand with digits together.

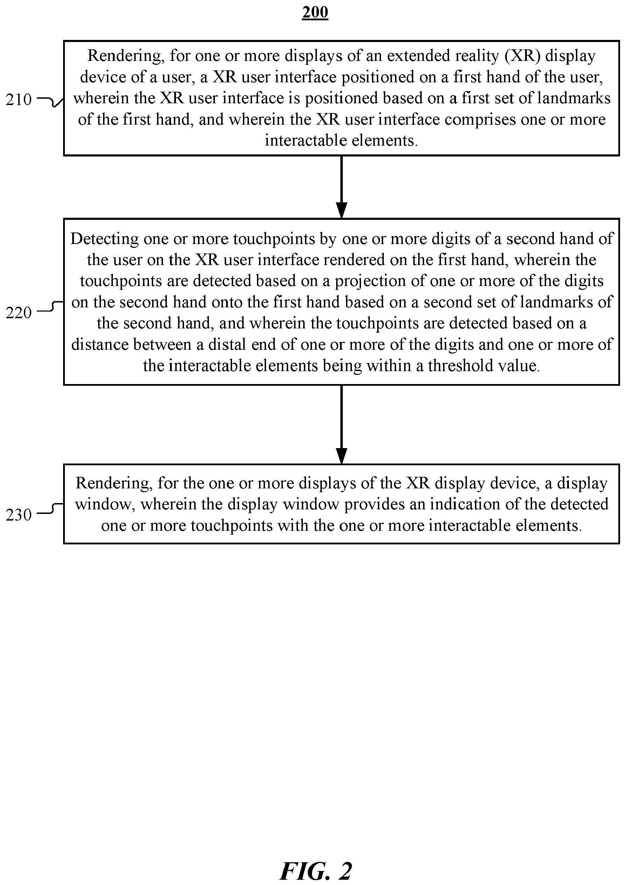

**FIG. 2** illustrates an example method 200 for providing an extended reality (XR) user interface for frictionless input. The method may begin at step 210, where the computing system 110 may render, for one or more displays of an extended reality (XR) display device of a user, a XR user interface positioned on a first hand of the user, wherein the XR user interface is positioned based on a first set of landmarks of the first hand, and wherein the XR user interface comprises one or more interactable elements. At step 220, the computing system 110 may detect one or more touchpoints by one or more digits of a second hand of the user on the XR user interface rendered on the first hand, wherein the touchpoints are detected based on a projection of one or more of the digits on the second hand onto the first hand based on a second set of landmarks of the second hand, and wherein the touchpoints are detected based on a distance between a distal end of one or more of the digits and one or more of the interactable elements being within a threshold value. At step 230, the computing system 110 may render, for the one or more displays of the XR display device, a display window, wherein the display window provides an indication of the detected one or more touchpoints with the one or more interactable elements. Particular examples may repeat one or more steps of the method of FIG. 2, where appropriate. Although this disclosure describes and illustrates particular steps of the method of FIG. 2 as occurring in a particular order, this disclosure contemplates any suitable steps of the method of FIG. 2 occurring in any suitable order. Moreover, although this disclosure describes and illustrates an example method for including the particular steps of the method of FIG. 2, this disclosure contemplates any suitable method for providing an extended reality (XR) user interface for frictionless input including any suitable steps, which may include all, some, or none of the steps of the method of FIG. 2, where appropriate. Furthermore, although this disclosure describes and illustrates particular components, devices, or systems carrying out particular steps of the method of FIG. 2, this disclosure contemplates any suitable combination of any suitable components, devices, or systems carrying out any suitable steps of the method of FIG. 2.

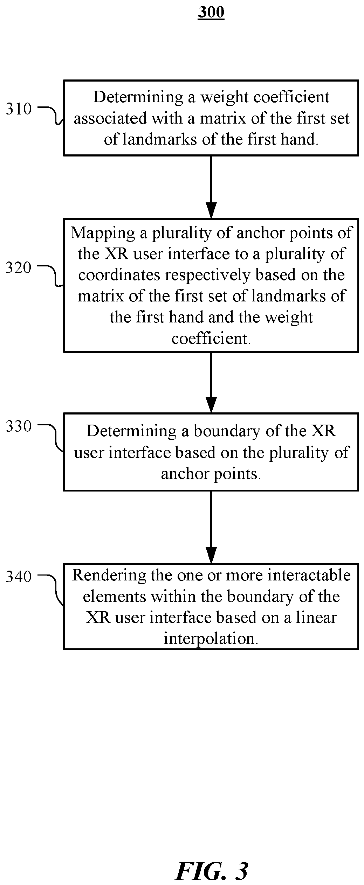

**FIG. 3** illustrates an example method 300 for rendering the XR user interface based on a first set of landmarks of the first hand. The method may begin at step 310, where the computing system 110 may determine a weight coefficient associated with a matrix of the first set of landmarks of the first hand. At step 320, the computing system 110 may map a plurality of anchor points of the XR user interface to a plurality of coordinates, respectively, based on the matrix of the first set of landmarks of the first hand and the weight coefficient. At step 330, the computing system 110 may determine a boundary of the XR user interface based on the plurality of anchor points. At step 340, the computing system 110 may render the one or more interactable elements within the boundary of the XR user interface based on a linear interpolation. Particular examples may repeat one or more steps of the method of FIG. 3, where appropriate. Although this disclosure describes and illustrates particular steps of the method of FIG. 3 as occurring in a particular order, this disclosure contemplates any suitable steps of the method of FIG. 3 occurring in any suitable order. Moreover, although this disclosure describes and illustrates an example method for rendering the XR user interface based on a first set of landmarks of the first hand including the particular steps of the method of FIG. 3, this disclosure contemplates any suitable method for rendering the XR user interface based on a first set of landmarks of the first hand including any suitable steps, which may include all, some, or none of the steps of the method of FIG. 3, where appropriate. Furthermore, although this disclosure describes and illustrates particular components, devices, or systems carrying out particular steps of the method of FIG. 3, this disclosure contemplates any suitable combination of any suitable components, devices, or systems carrying out any suitable steps of the method of FIG. 3.

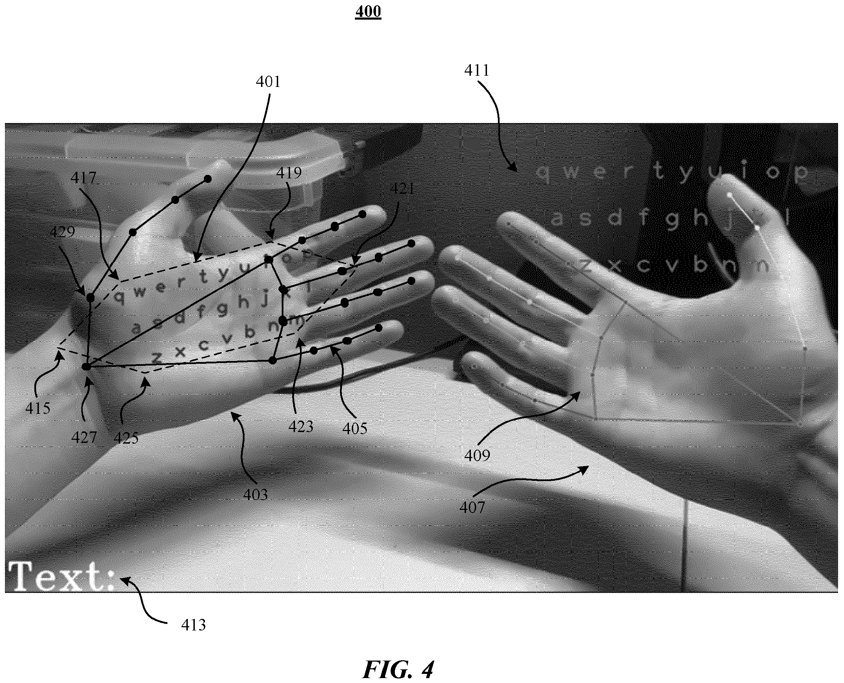

**FIG. 4** illustrates an example scenario of rendering the XR user interface in the XR environment for the user to interact with. The computing system 110 may render an XR user interface 401 positioned on a first hand 403 of the user based on a first set of landmarks 405 of the first hand 403. The computing system 110 may render the XR user interface 401 onto the palm area since the palm area is more accessible to write on than the finger area due to possible spacing and gaps between digits. The XR user interface 401 may be a virtual alphabet keyboard. The computing system 110 may track a second hand 407 of the user based on a second set of landmarks 409 of the user. The computing system 110 may render a display window 411 showing each interactable element (e.g., 26 alphabet letters) of the XR user interface 401. The computing system 110 may generate a suggested text input 413 once one or more touchpoints by the second hand 407 are detected. The XR user interface may comprise six anchor points 415, 417, 419, 421, 423, and 425. The six anchor points 415, 417, 419, 421, 423, and 425 may define a hexagon shape. The hexagon shape may be used as a boundary for interpolating the interactable element (e.g., 26 alphabet letters) of the XR user interface 401. The computing system 110 may map the six anchor points 415, 417, 419, 421, 423, and 425 to six coordinates, respectively, based on a weight coefficient *W*[w₀, w₁, ..., w₂₀] associated with a matrix *L*[L₀, L₁, ..., L₂₀] of the first set of landmarks 405 of the first hand 403. The computing system 110 may calculate the coordinates [x, y, z] of the anchor point 415 based on landmarks 427 (L₀ [x₀, y₀, z₀]) and 429 (L₁ [x₁, y₁, z₁]) of the first set of landmarks 405. The coordinates [x, y, z] of the anchor point 415 may equal w₀× L₀+ w₁× L₁. The computing system 110 may perform calculations for the rest coordinates for mapping the rest of the anchor points 417, 419, 421, 423, and 425 of the XR user interface in a similar manner. Each of the rest anchor points 417, 419, 421, 423, and 425 may be mapped to coordinates based on different landmarks and weight coefficients compared to the anchor point 415.

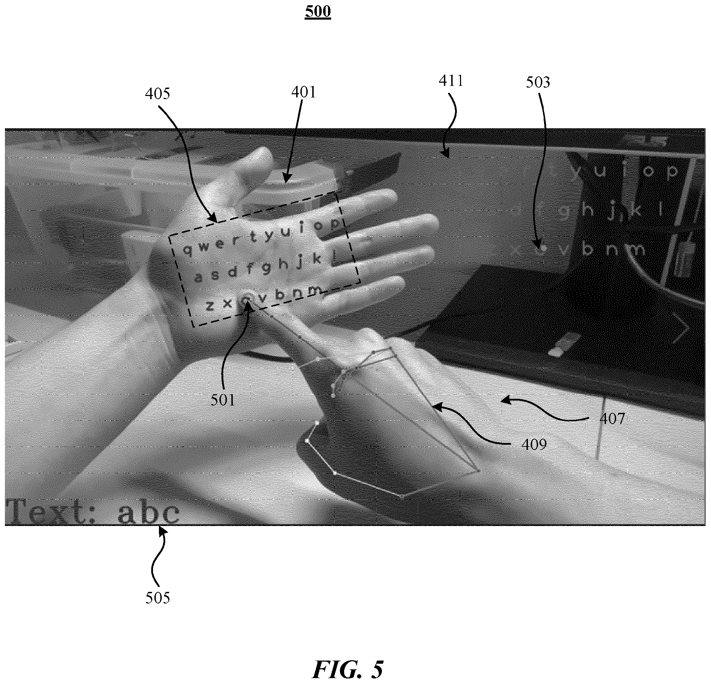

**FIG. 5** illustrates an example scenario of the user interacting with the XR user interface using keystroke input mode. The user may use the index finger of the second hand 407 to input "abc" to the XR user interface 401 using the keystroke input mode. The computing system 110 may detect one or more touchpoints by the index finger of the second hand 407 of the user on the XR user interface 401 rendered on the first hand 403. The computing system 110 may detect the touchpoints based on a projection of the index finger on the second hand 407 onto the first hand 403 based on the second set of landmarks 409 of the second hand 407. The computing system 110 may detect a touchpoint 501 based on a distance between a distal end of the index finger and the interactable element letter "c" of the XR user interface 401 being within a threshold value. The distance may be a point-to-point distance between the distal end of the index finger and the center of the interactable element letter "c" of the XR user interface 401. The computing system 110 may render the display window 411 to provide an indication 503 of the detected touchpoint 501 with the interactable element letter "c" in real-time. The computing system 110 may generate a text 505 as the user is typing. Although this disclosure describes the user interacting with the XR user interface using keystroke input mode in a particular manner, this disclosure contemplates the user interacting with the XR user interface using keystroke input mode in any suitable manner.

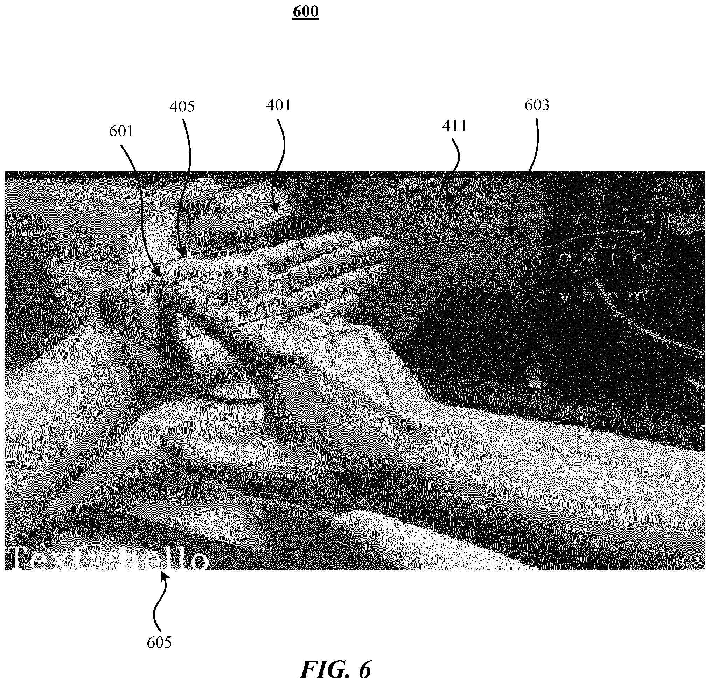

**FIG. 6** illustrates an example scenario of the user interacting with the XR user interface using swipe-to-text input mode. The user may use the index finger of the second hand 407 to interact with the XR user interface 401 using the swipe-to-text input mode. The computing system 110 may determine a point-to-plane distance between the distal end 601 of the index finger and a plane of the XR user interface 401. The computing system 110 may determine a first time T1 associated with a first touchpoint and a second time T2 associated with a second touchpoint detected by the computing system 110. The first touchpoint may be where the user starts to input a text using swipe-to-text input mode, and the second touchpoint may be where the user finishes inputting the text. The text may be a word, a phrase, a sentence, or a paragraph. The point-to-plane distance may be within a point-to-plane threshold value from the first time T1 to the second time T2. The computing system 110 may determine a trajectory 603 of the second hand 407 of the user on the one or more interactable elements of the XR user interface 401 from the starting first time T1 to the finishing second time T2. The computing system 110 may render the display window 411 to provide an indication of the trajectory 603. The computing system 110 may determine an original text input based on the trajectory 603. The original text input may show "hwlo" based on the trajectory 603. The computing system 110 may generate a suggested text input 605 to autocorrect the original input "hwlo" to "hello" using a language model. Although this disclosure describes the user interacting with the XR user interface using swipe-to-text input mode in a particular manner, this disclosure contemplates the user interacting with the XR user interface using swipe-to-text input mode in any suitable manner.

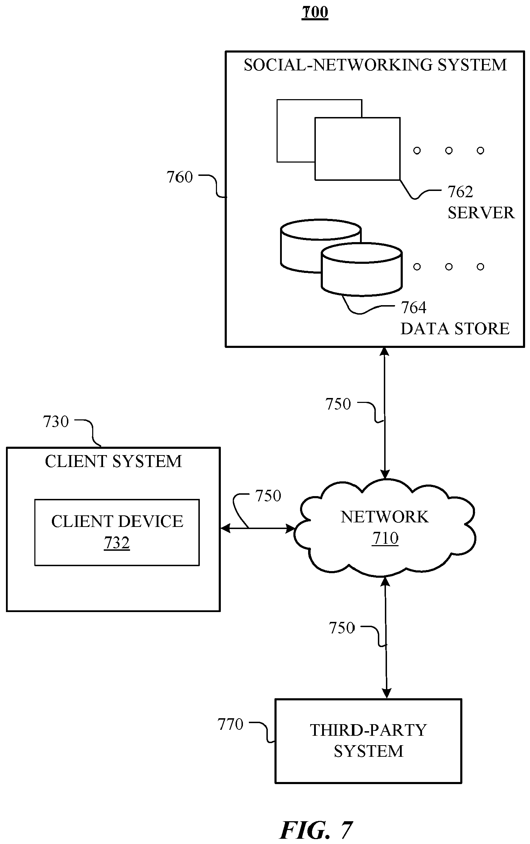

**FIG. 7** illustrates an example network environment 700 associated with a social-networking system. Network environment 700 includes a client system 730, a social-networking system 760, and a third-party system 770 connected to each other by a network 710. Although FIG. 7 illustrates a particular arrangement of client system 730, social-networking system 760, third-party system 770, and network 710, this disclosure contemplates any suitable arrangement of client system 730, social-networking system 760, third-party system 770, and network 710. As an example and not by way of limitation, two or more of client system 730, social-networking system 760, and third-party system 770 may be connected to each other directly, bypassing network 710. As another example, two or more of client system 730, social-networking system 760, and third-party system 770 may be physically or logically co-located with each other in whole or in part. Moreover, although FIG. 7 illustrates a particular number of client systems 730, social-networking systems 760, third-party systems 770, and networks 710, this disclosure contemplates any suitable number of client systems 730, social-networking systems 760, third-party systems 770, and networks 710. As an example and not by way of limitation, network environment 700 may include multiple client system 730, social-networking systems 760, third-party systems 770, and networks 710.

This disclosure contemplates any suitable network 710. As an example and not by way of limitation, one or more portions of network 710 may include an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or a combination of two or more of these. Network 710 may include one or more networks 710.

Links 750 may connect client system 730, social-networking system 760, and third-party system 770 to communication network 710 or to each other. This disclosure contemplates any suitable links 750. In particular examples, one or more links 750 include one or more wireline (such as for example Digital Subscriber Line (DSL) or Data Over Cable Service Interface Specification (DOCSIS)), wireless (such as for example Wi-Fi or Worldwide Interoperability for Microwave Access (WiMAX)), or optical (such as for example Synchronous Optical Network (SONET) or Synchronous Digital Hierarchy (SDH)) links. In particular examples, one or more links 750 each include an ad hoc network, an intranet, an extranet, a VPN, a LAN, a WLAN, a WAN, a WWAN, a MAN, a portion of the Internet, a portion of the PSTN, a cellular technology-based network, a satellite communications technology-based network, another link 750, or a combination of two or more such links 750. Links 750 need not necessarily be the same throughout network environment 700. One or more first links 750 may differ in one or more respects from one or more second links 750.

In particular examples, client system 730 may be an electronic device including hardware, software, or embedded logic components or a combination of two or more such components and capable of carrying out the appropriate functionalities implemented or supported by client system 730. As an example and not by way of limitation, a client system 730 may include a computer system such as a desktop computer, notebook or laptop computer, netbook, a tablet computer, e-book reader, GPS device, camera, personal digital assistant (PDA), handheld electronic device, cellular telephone, smartphone, augmented/virtual reality device, other suitable electronic device, or any suitable combination thereof. This disclosure contemplates any suitable client systems 730. A client system 730 may enable a network user at client system 730 to access network 710. A client system 730 may enable its user to communicate with other users at other client systems 730.

In particular examples, client system 730 may include a web browser 732, and may have one or more add-ons, plug-ins, or other extensions. A user at client system 730 may enter a Uniform Resource Locator (URL) or other address directing the web browser 732 to a particular server (such as server 762, or a server associated with a third-party system 770), and the web browser 732 may generate a Hyper Text Transfer Protocol (HTTP) request and communicate the HTTP request to server. The server may accept the HTTP request and communicate to client system 730 one or more Hyper Text Markup Language (HTML) files responsive to the HTTP request. Client system 730 may render a webpage based on the HTML files from the server for presentation to the user. This disclosure contemplates any suitable webpage files. As an example and not by way of limitation, webpages may render from HTML files, Extensible Hyper Text Markup Language (XHTML) files, or Extensible Markup Language (XML) files, according to particular needs. Such pages may also execute scripts, combinations of markup language and scripts, and the like. Herein, reference to a webpage encompasses one or more corresponding webpage files (which a browser may use to render the webpage) and vice versa, where appropriate.

In particular examples, social-networking system 760 may be a network-addressable computing system that can host an online social network. Social-networking system 760 may generate, store, receive, and send social-networking data, such as, for example, user-profile data, concept-profile data, social-graph information, or other suitable data related to the online social network. Social-networking system 760 may be accessed by the other components of network environment 700 either directly or via network 710. As an example and not by way of limitation, client system 730 may access social-networking system 760 using a web browser 732, or a native application associated with social-networking system 760 (e.g., a mobile social-networking application, a messaging application, another suitable application, or any combination thereof) either directly or via network 710. In particular examples, social-networking system 760 may include one or more servers 762. Each server 762 may be a unitary server or a distributed server spanning multiple computers or multiple datacenters. Servers 762 may be of various types, such as, for example and without limitation, web server, news server, mail server, message server, advertising server, file server, application server, exchange server, database server, proxy server, another server suitable for performing functions or processes described herein, or any combination thereof. In particular examples, each server 762 may include hardware, software, or embedded logic components or a combination of two or more such components for carrying out the appropriate functionalities implemented or supported by server 762. In particular examples, social-networking system 760 may include one or more data stores 764. Data stores 764 may be used to store various types of information. In particular examples, the information stored in data stores 764 may be organized according to specific data structures. In particular examples, each data store 764 may be a relational, columnar, correlation, or other suitable database. Although this disclosure describes or illustrates particular types of databases, this disclosure contemplates any suitable types of databases. Particular examples may provide interfaces that enable a client system 730, a social-networking system 760, or a third-party system 770 to manage, retrieve, modify, add, or delete, the information stored in data store 764.

In particular examples, social-networking system 760 may store one or more social graphs in one or more data stores 764. In particular examples, a social graph may include multiple nodes-which may include multiple user nodes (each corresponding to a particular user) or multiple concept nodes (each corresponding to a particular concept)-and multiple edges connecting the nodes. Social-networking system 760 may provide users of the online social network the ability to communicate and interact with other users. In particular examples, users may join the online social network via social-networking system 760 and then add connections (e.g., relationships) to a number of other users of social-networking system 760 to whom they want to be connected. Herein, the term "friend" may refer to any other user of social-networking system 760 with whom a user has formed a connection, association, or relationship via social-networking system 760.

In particular examples, social-networking system 760 may provide users with the ability to take actions on various types of items or objects, supported by social-networking system 760. As an example and not by way of limitation, the items and objects may include groups or social networks to which users of social-networking system 760 may belong, events or calendar entries in which a user might be interested, computer-based applications that a user may use, transactions that allow users to buy or sell items via the service, interactions with advertisements that a user may perform, or other suitable items or objects. A user may interact with anything that is capable of being represented in social-networking system 760 or by an external system of third-party system 770, which is separate from social-networking system 760 and coupled to social-networking system 760 via a network 710.

In particular examples, social-networking system 760 may be capable of linking a variety of entities. As an example and not by way of limitation, social-networking system 760 may enable users to interact with each other as well as receive content from third-party systems 770 or other entities, or to allow users to interact with these entities through an application programming interfaces (API) or other communication channels.

In particular examples, a third-party system 770 may include one or more types of servers, one or more data stores, one or more interfaces, including but not limited to APIs, one or more web services, one or more content sources, one or more networks, or any other suitable components, e.g., that servers may communicate with. A third-party system 770 may be operated by a different entity from an entity operating social-networking system 760. In particular examples, however, social-networking system 760 and third-party systems 770 may operate in conjunction with each other to provide social-networking services to users of social-networking system 760 or third-party systems 770. In this sense, social-networking system 760 may provide a platform, or backbone, which other systems, such as third-party systems 770, may use to provide social-networking services and functionality to users across the Internet.

In particular examples, a third-party system 770 may include a third-party content object provider. A third-party content object provider may include one or more sources of content objects, which may be communicated to a client system 730. As an example and not by way of limitation, content objects may include information regarding things or activities of interest to the user, such as, for example, movie show times, movie reviews, restaurant reviews, restaurant menus, product information and reviews, or other suitable information. As another example and not by way of limitation, content objects may include incentive content objects, such as coupons, discount tickets, gift certificates, or other suitable incentive objects.

In particular examples, social-networking system 760 also includes user-generated content objects, which may enhance a user's interactions with social-networking system 760. User-generated content may include anything a user can add, upload, send, or "post" to social-networking system 760. As an example and not by way of limitation, a user communicates posts to social-networking system 760 from a client system 730. Posts may include data such as status updates or other textual data, location information, photos, videos, links, music or other similar data or media. Content may also be added to social-networking system 760 by a third-party through a "communication channel," such as a newsfeed or stream.

In particular examples, social-networking system 760 may include a variety of servers, sub-systems, programs, modules, logs, and data stores. In particular examples, social-networking system 760 may include one or more of the following: a web server, action logger, API-request server, relevance-and-ranking engine, content-object classifier, notification controller, action log, third-party-content-object-exposure log, inference module, authorization/privacy server, search module, advertisement-targeting module, user-interface module, user-profile store, connection store, third-party content store, or location store. Social-networking system 760 may also include suitable components such as network interfaces, security mechanisms, load balancers, failover servers, management-and-network-operations consoles, other suitable components, or any suitable combination thereof. In particular examples, social-networking system 760 may include one or more user-profile stores for storing user profiles. A user profile may include, for example, biographic information, demographic information, behavioral information, social information, or other types of descriptive information, such as work experience, educational history, hobbies or preferences, interests, affinities, or location. Interest information may include interests related to one or more categories. Categories may be general or specific. As an example and not by way of limitation, if a user "likes" an article about a brand of shoes the category may be the brand, or the general category of "shoes" or "clothing." A connection store may be used for storing connection information about users. The connection information may indicate users who have similar or common work experience, group memberships, hobbies, educational history, or are in any way related or share common attributes. The connection information may also include user-defined connections between different users and content (both internal and external). A web server may be used for linking social-networking system 760 to one or more client systems 730 or one or more third-party system 770 via network 710. The web server may include a mail server or other messaging functionality for receiving and routing messages between social-networking system 760 and one or more client systems 730. An API-request server may allow a third-party system 770 to access information from social-networking system 760 by calling one or more APIs. An action logger may be used to receive communications from a web server about a user's actions on or off social-networking system 760. In conjunction with the action log, a third-party-content-object log may be maintained of user exposures to third-party-content objects. A notification controller may provide information regarding content objects to a client system 730. Information may be pushed to a client system 730 as notifications, or information may be pulled from client system 730 responsive to a request received from client system 730. Authorization servers may be used to enforce one or more privacy settings of the users of social-networking system 760. A privacy setting of a user determines how particular information associated with a user can be shared. The authorization server may allow users to opt in to or opt out of having their actions logged by social-networking system 760 or shared with other systems (e.g., third-party system 770), such as, for example, by setting appropriate privacy settings. Third-party-content-object stores may be used to store content objects received from third parties, such as a third-party system 770. Location stores may be used for storing location information received from client systems 730 associated with users. Advertisement-pricing modules may combine social information, the current time, location information, or other suitable information to provide relevant advertisements, in the form of notifications, to a user.

In particular examples, one or more objects (e.g., content or other types of objects) of a computing system may be associated with one or more privacy settings. The one or more objects may be stored on or otherwise associated with any suitable computing system or application, such as, for example, a social-networking system 760, a client system 730 (e.g., AR/VR display device 135), a third-party system 770, a social-networking application, an assistant application, a messaging application, a photo-sharing application, or any other suitable computing system or application. Although the examples discussed herein are in the context of an online social network, these privacy settings may be applied to any other suitable computing system. Privacy settings (or "access settings") for an object may be stored in any suitable manner, such as, for example, in association with the object, in an index on an authorization server, in another suitable manner, or any suitable combination thereof. A privacy setting for an object may specify how the object (or particular information associated with the object) can be accessed, stored, or otherwise used (e.g., viewed, shared, modified, copied, executed, surfaced, or identified) within the online social network. When privacy settings for an object allow a particular user or other entity to access that object, the object may be described as being "visible" with respect to that user or other entity. As an example and not by way of limitation, a user of the online social network may specify privacy settings for a user-profile page that identify a set of users that may access work-experience information on the user-profile page, thus excluding other users from accessing that information.

In particular examples, privacy settings for an object may specify a "blocked list" of users or other entities that should not be allowed to access certain information associated with the object. In particular examples, the blocked list may include third-party entities. The blocked list may specify one or more users or entities for which an object is not visible. As an example and not by way of limitation, a user may specify a set of users who may not access photo albums associated with the user, thus excluding those users from accessing the photo albums (while also possibly allowing certain users not within the specified set of users to access the photo albums). In particular examples, privacy settings may be associated with particular social-graph elements. Privacy settings of a social-graph element, such as a node or an edge, may specify how the social-graph element, information associated with the social-graph element, or objects associated with the social-graph element can be accessed using the online social network. As an example and not by way of limitation, a particular photo may have a privacy setting specifying that the photo may be accessed only by users tagged in the photo and friends of the users tagged in the photo. In particular examples, privacy settings may allow users to opt in to or opt out of having their content, information, or actions stored/logged by the social-networking system 760 or shared with other systems (e.g., a third-party system 770). Although this disclosure describes using particular privacy settings in a particular manner, this disclosure contemplates using any suitable privacy settings in any suitable manner.

In particular examples, the social-networking system 760 may present a "privacy wizard" (e.g., within a webpage, a module, one or more dialog boxes, or any other suitable interface) to the first user to assist the first user in specifying one or more privacy settings. The privacy wizard may display instructions, suitable privacy-related information, current privacy settings, one or more input fields for accepting one or more inputs from the first user specifying a change or confirmation of privacy settings, or any suitable combination thereof. In particular examples, the social-networking system 760 may offer a "dashboard" functionality to the first user that may display, to the first user, current privacy settings of the first user. The dashboard functionality may be displayed to the first user at any appropriate time (e.g., following an input from the first user summoning the dashboard functionality, following the occurrence of a particular event or trigger action). The dashboard functionality may allow the first user to modify one or more of the first user's current privacy settings at any time, in any suitable manner (e.g., redirecting the first user to the privacy wizard).

Privacy settings associated with an object may specify any suitable granularity of permitted access or denial of access. As an example and not by way of limitation, access or denial of access may be specified for particular users (e.g., only me, my roommates, my boss), users within a particular degree-of-separation (e.g., friends, friends-of-friends), user groups (e.g., the gaming club, my family), user networks (e.g., employees of particular employers, students or alumni of particular university), all users ("public"), no users ("private"), users of third-party systems 770, particular applications (e.g., third-party applications, external websites), other suitable entities, or any suitable combination thereof. Although this disclosure describes particular granularities of permitted access or denial of access, this disclosure contemplates any suitable granularities of permitted access or denial of access.

In particular examples, one or more servers 762 may be authorization/privacy servers for enforcing privacy settings. In response to a request from a user (or other entity) for a particular object stored in a data store 764, the social-networking system 760 may send a request to the data store 764 for the object. The request may identify the user associated with the request and the object may be sent only to the user (or a computing system 110 of the user) if the authorization server determines that the user is authorized to access the object based on the privacy settings associated with the object. If the requesting user is not authorized to access the object, the authorization server may prevent the requested object from being retrieved from the data store 764 or may prevent the requested object from being sent to the user. In the search-query context, an object may be provided as a search result only if the querying user is authorized to access the object, e.g., if the privacy settings for the object allow it to be surfaced to, discovered by, or otherwise visible to the querying user. In particular examples, an object may represent content that is visible to a user through a newsfeed of the user. As an example and not by way of limitation, one or more objects may be visible to a user's "Trending" page. In particular examples, an object may correspond to a particular user. The object may be content associated with the particular user, or may be the particular user's account or information stored on the social-networking system 760, or other computing system. As an example and not by way of limitation, a first user may view one or more second users of an online social network through a "People You May Know" function of the online social network, or by viewing a list of friends of the first user. As an example and not by way of limitation, a first user may specify that they do not wish to see objects associated with a particular second user in their newsfeed or friends list. If the privacy settings for the object do not allow it to be surfaced to, discovered by, or visible to the user, the object may be excluded from the search results. Although this disclosure describes enforcing privacy settings in a particular manner, this disclosure contemplates enforcing privacy settings in any suitable manner.

In particular examples, different objects of the same type associated with a user may have different privacy settings. Different types of objects associated with a user may have different types of privacy settings. As an example and not by way of limitation, a first user may specify that the first user's status updates are public, but any images shared by the first user are visible only to the first user's friends on the online social network. As another example and not by way of limitation, a user may specify different privacy settings for different types of entities, such as individual users, friends-of-friends, followers, user groups, or corporate entities. As another example and not by way of limitation, a first user may specify a group of users that may view videos posted by the first user, while keeping the videos from being visible to the first user's employer. In particular examples, different privacy settings may be provided for different user groups or user demographics. As an example and not by way of limitation, a first user may specify that other users who attend the same university as the first user may view the first user's pictures, but that other users who are family members of the first user may not view those same pictures.

In particular examples, the social-networking system 760 may provide one or more default privacy settings for each object of a particular object-type. A privacy setting for an object that is set to a default may be changed by a user associated with that object. As an example and not by way of limitation, all images posted by a first user may have a default privacy setting of being visible only to friends of the first user and, for a particular image, the first user may change the privacy setting for the image to be visible to friends and friends-of-friends.

In particular examples, privacy settings may allow a first user to specify (e.g., by opting out, by not opting in) whether the social-networking system 760 may receive, collect, log, or store particular objects or information associated with the user for any purpose. In particular examples, privacy settings may allow the first user to specify whether particular applications or processes may access, store, or use particular objects or information associated with the user. The privacy settings may allow the first user to opt in or opt out of having objects or information accessed, stored, or used by specific applications or processes. The social-networking system 760 may access such information in order to provide a particular function or service to the first user, without the social-networking system 760 having access to that information for any other purposes. Before accessing, storing, or using such objects or information, the social-networking system 760 may prompt the user to provide privacy settings specifying which applications or processes, if any, may access, store, or use the object or information prior to allowing any such action. As an example and not by way of limitation, a first user may transmit a message to a second user via an application related to the online social network (e.g., a messaging app), and may specify privacy settings that such messages should not be stored by the social-networking system 760.

In particular examples, a user may specify whether particular types of objects or information associated with the first user may be accessed, stored, or used by the social-networking system 760. As an example and not by way of limitation, the first user may specify that images sent by the first user through the social-networking system 760 may not be stored by the social-networking system 760. As another example and not by way of limitation, a first user may specify that messages sent from the first user to a particular second user may not be stored by the social-networking system 760. As yet another example and not by way of limitation, a first user may specify that all objects sent via a particular application may be saved by the social-networking system 760.

In particular examples, privacy settings may allow a first user to specify whether particular objects or information associated with the first user may be accessed from particular client systems 730 or third-party systems 770. The privacy settings may allow the first user to opt in or opt out of having objects or information accessed from a particular device (e.g., the phone book on a user's smart phone), from a particular application (e.g., a messaging app), or from a particular system (e.g., an email server). The social-networking system 760 may provide default privacy settings with respect to each device, system, or application, and/or the first user may be prompted to specify a particular privacy setting for each context. As an example and not by way of limitation, the first user may utilize a location-services feature of the social-networking system 760 to provide recommendations for restaurants or other places in proximity to the user. The first user's default privacy settings may specify that the social-networking system 760 may use location information provided from a computing system 110 of the first user to provide the location-based services, but that the social-networking system 760 may not store the location information of the first user or provide it to any third-party system 770. The first user may then update the privacy settings to allow location information to be used by a third-party image-sharing application in order to geo-tag photos.

In particular examples, privacy settings may allow a user to specify one or more geographic locations from which objects can be accessed. Access or denial of access to the objects may depend on the geographic location of a user who is attempting to access the objects. As an example and not by way of limitation, a user may share an object and specify that only users in the same city may access or view the object. As another example and not by way of limitation, a first user may share an object and specify that the object is visible to second users only while the first user is in a particular location. If the first user leaves the particular location, the object may no longer be visible to the second users. As another example and not by way of limitation, a first user may specify that an object is visible only to second users within a threshold distance from the first user. If the first user subsequently changes location, the original second users with access to the object may lose access, while a new group of second users may gain access as they come within the threshold distance of the first user.

In particular examples, the social-networking system 760 may have functionalities that may use, as inputs, personal or biometric information of a user for user-authentication or experience-personalization purposes. A user may opt to make use of these functionalities to enhance their experience on the online social network. As an example and not by way of limitation, a user may provide personal or biometric information to the social-networking system 760. The user's privacy settings may specify that such information may be used only for particular processes, such as authentication, and further specify that such information may not be shared with any third-party system 770 or used for other processes or applications associated with the social-networking system 760. As another example and not by way of limitation, the social-networking system 760 may provide a functionality for a user to provide voice-print recordings to the online social network. As an example and not by way of limitation, if a user wishes to utilize this function of the online social network, the user may provide a voice recording of his or her own voice to provide a status update on the online social network. The recording of the voice-input may be compared to a voice print of the user to determine what words were spoken by the user. The user's privacy setting may specify that such voice recording may be used only for voice-input purposes (e.g., to authenticate the user, to send voice messages, to improve voice recognition in order to use voice-operated features of the online social network), and further specify that such voice recording may not be shared with any third-party system 770 or used by other processes or applications associated with the social-networking system 760.

### Systems and Methods

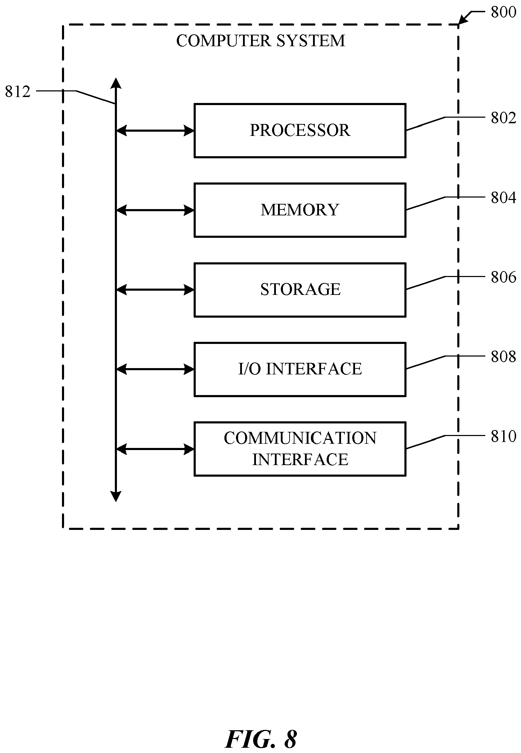

FIG. 8 illustrates an example computer system 800. In particular examples, one or more computer systems 800 perform one or more steps of one or more methods described or illustrated herein. In particular examples, one or more computer systems 800 provide functionality described or illustrated herein. In particular examples, software running on one or more computer systems 800 performs one or more steps of one or more methods described or illustrated herein or provides functionality described or illustrated herein. Particular examples include one or more portions of one or more computer systems 800. Herein, reference to a computer system may encompass a computing device, and vice versa, where appropriate. Moreover, reference to a computer system may encompass one or more computer systems, where appropriate.

This disclosure contemplates any suitable number of computer systems 800. This disclosure contemplates computer system 800 taking any suitable physical form. As example and not by way of limitation, computer system 800 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 800 may include one or more computer systems 800; be unitary or distributed; span multiple locations; span multiple machines; span multiple data centers; or reside in a cloud, which may include one or more cloud components in one or more networks. Where appropriate, one or more computer systems 800 may perform without substantial spatial or temporal limitation one or more steps of one or more methods described or illustrated herein. As an example and not by way of limitation, one or more computer systems 800 may perform in real time or in batch mode one or more steps of one or more methods described or illustrated herein. One or more computer systems 800 may perform at different times or at different locations one or more steps of one or more methods described or illustrated herein, where appropriate.

In particular examples, computer system 800 includes a processor 802, memory 804, storage 806, an input/output (I/O) interface 808, a communication interface 810, and a bus 812. Although this disclosure describes and illustrates a particular computer system having a particular number of particular components in a particular arrangement, this disclosure contemplates any suitable computer system having any suitable number of any suitable components in any suitable arrangement.

In particular examples, processor 802 includes hardware for executing instructions, such as those making up a computer program. As an example and not by way of limitation, to execute instructions, processor 802 may retrieve (or fetch) the instructions from an internal register, an internal cache, memory 804, or storage 806; decode and execute them; and then write one or more results to an internal register, an internal cache, memory 804, or storage 806. In particular examples, processor 802 may include one or more internal caches for data, instructions, or addresses. This disclosure contemplates processor 802 including any suitable number of any suitable internal caches, where appropriate. As an example and not by way of limitation, processor 802 may include one or more instruction caches, one or more data caches, and one or more translation lookaside buffers (TLBs). Instructions in the instruction caches may be copies of instructions in memory 804 or storage 806, and the instruction caches may speed up retrieval of those instructions by processor 802. Data in the data caches may be copies of data in memory 804 or storage 806 for instructions executing at processor 802 to operate on; the results of previous instructions executed at processor 802 for access by subsequent instructions executing at processor 802 or for writing to memory 804 or storage 806; or other suitable data. The data caches may speed up read or write operations by processor 802. The TLBs may speed up virtual-address translation for processor 802. In particular examples, processor 802 may include one or more internal registers for data, instructions, or addresses. This disclosure contemplates processor 802 including any suitable number of any suitable internal registers, where appropriate. Where appropriate, processor 802 may include one or more arithmetic logic units (ALUs); be a multi-core processor; or include one or more processors 802. Although this disclosure describes and illustrates a particular processor, this disclosure contemplates any suitable processor.

In particular examples, memory 804 includes main memory for storing instructions for processor 802 to execute or data for processor 802 to operate on. As an example and not by way of limitation, computer system 800 may load instructions from storage 806 or another source (such as, for example, another computer system 800) to memory 804. Processor 802 may then load the instructions from memory 804 to an internal register or internal cache. To execute the instructions, processor 802 may retrieve the instructions from the internal register or internal cache and decode them. During or after execution of the instructions, processor 802 may write one or more results (which may be intermediate or final results) to the internal register or internal cache. Processor 802 may then write one or more of those results to memory 804. In particular examples, processor 802 executes only instructions in one or more internal registers or internal caches or in memory 804 (as opposed to storage 806 or elsewhere) and operates only on data in one or more internal registers or internal caches or in memory 804 (as opposed to storage 806 or elsewhere). One or more memory buses (which may each include an address bus and a data bus) may couple processor 802 to memory 804. Bus 812 may include one or more memory buses, as described below. In particular examples, one or more memory management units (MMUs) reside between processor 802 and memory 804 and facilitate accesses to memory 804 requested by processor 802. In particular examples, memory 804 includes random access memory (RAM). This RAM may be volatile memory, where appropriate. Where appropriate, this RAM may be dynamic RAM (DRAM) or static RAM (SRAM). Moreover, where appropriate, this RAM may be single-ported or multi-ported RAM. This disclosure contemplates any suitable RAM. Memory 804 may include one or more memories 804, where appropriate. Although this disclosure describes and illustrates particular memory, this disclosure contemplates any suitable memory.

In particular examples, storage 806 includes mass storage for data or instructions. As an example and not by way of limitation, storage 806 may include a hard disk drive (HDD), a floppy disk drive, flash memory, an optical disc, a magneto-optical disc, magnetic tape, or a Universal Serial Bus (USB) drive or a combination of two or more of these. Storage 806 may include removable or non-removable (or fixed) media, where appropriate. Storage 806 may be internal or external to computer system 800, where appropriate. In particular examples, storage 806 is non-volatile, solid-state memory. In particular examples, storage 806 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 806 taking any suitable physical form. Storage 806 may include one or more storage control units facilitating communication between processor 802 and storage 806, where appropriate. Where appropriate, storage 806 may include one or more storages 806. Although this disclosure describes and illustrates particular storage, this disclosure contemplates any suitable storage.

In particular examples, I/O interface 808 includes hardware, software, or both, providing one or more interfaces for communication between computer system 800 and one or more I/O devices. Computer system 800 may include one or more of these I/O devices, where appropriate. One or more of these I/O devices may enable communication between a person and computer system 800. As an example and not by way of limitation, an I/O device may include a keyboard, keypad, microphone, monitor, mouse, printer, scanner, speaker, still camera, stylus, tablet, touch screen, trackball, video camera, another suitable I/O device or a combination of two or more of these. An I/O device may include one or more sensors. This disclosure contemplates any suitable I/O devices and any suitable I/O interfaces 808 for them. Where appropriate, I/O interface 808 may include one or more device or software drivers enabling processor 802 to drive one or more of these I/O devices. I/O interface 808 may include one or more I/O interfaces 808, where appropriate. Although this disclosure describes and illustrates a particular I/O interface, this disclosure contemplates any suitable I/O interface.

In particular examples, communication interface 810 includes hardware, software, or both providing one or more interfaces for communication (such as, for example, packet-based communication) between computer system 800 and one or more other computer systems 800 or one or more networks. As an example and not by way of limitation, communication interface 810 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 810 for it. As an example and not by way of limitation, computer system 800 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 800 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 800 may include any suitable communication interface 810 for any of these networks, where appropriate. Communication interface 810 may include one or more communication interfaces 810, where appropriate. Although this disclosure describes and illustrates a particular communication interface, this disclosure contemplates any suitable communication interface.

In particular examples, bus 812 includes hardware, software, or both coupling components of computer system 800 to each other. As an example and not by way of limitation, bus 812 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 812 may include one or more buses 812, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

### Miscellaneous

Herein, "or" is inclusive and not exclusive, unless expressly indicated otherwise or indicated otherwise by context. Therefore, herein, "A or B" means "A, B, or both," unless expressly indicated otherwise or indicated otherwise by context. Moreover, "and" is both joint and several, unless expressly indicated otherwise or indicated otherwise by context. Therefore, herein, "A and B" means "A and B, jointly or severally," unless expressly indicated otherwise or indicated otherwise by context.

The scope of this disclosure encompasses all changes, substitutions, variations, alterations, and modifications to the examples described or illustrated herein that a person having ordinary skill in the art would comprehend. The scope of this disclosure is not limited to the examples described or illustrated herein. Moreover, although this disclosure describes and illustrates respective embodiments herein as including particular components, elements, feature, functions, operations, or steps, any of these embodiments may include any combination or permutation of any of the components, elements, features, functions, operations, or steps described or illustrated anywhere herein that a person having ordinary skill in the art would comprehend. Furthermore, reference in the appended claims to an apparatus or system or a component of an apparatus or system being adapted to, arranged to, capable of, configured to, enabled to, operable to, or operative to perform a particular function encompasses that apparatus, system, component, whether or not it or that particular function is activated, turned on, or unlocked, as long as that apparatus, system, or component is so adapted, arranged, capable, configured, enabled, operable, or operative. Additionally, although this disclosure describes or illustrates particular embodiments as providing particular advantages, particular embodiments may provide none, some, or all of these advantages.

## Claims

1. A method comprising, by one or more computing systems:
rendering, for one or more displays of an extended reality, XR, display device of a user, a XR user interface positioned on a first hand of the user, wherein the XR user interface is positioned based on a first set of landmarks of the first hand, and wherein the XR user interface comprises one or more interactable elements;
detecting one or more touchpoints by one or more digits of a second hand of the user on the XR user interface rendered on the first hand, wherein the touchpoints are detected based on a projection of one or more of the digits on the second hand onto the first hand based on a second set of landmarks of the second hand, and wherein the touchpoints are detected based on a distance between a distal end of one or more of the digits and one or more of the interactable elements being within a threshold value; and
rendering, for the one or more displays of the XR display device, a display window, wherein the display window provides an indication of the detected one or more touchpoints with the one or more interactable elements.

2. The method of claim 1, wherein the XR user interface is rotatable in response to a rotational motion of the first hand of the user.

3. The method of claim 1 or 2, wherein the XR user interface is scalable in response to one or more of:
a multi-touch of the second hand of the user; or
a translational motion of the first hand of the user.

4. The method of any preceding claim, further comprising:
determining a weight coefficient associated with a matrix of the first set of landmarks of the first hand; and
mapping a plurality of anchor points of the XR user interface to a plurality of coordinates respectively based on the matrix of the first set of landmarks of the first hand and the weight coefficient; preferably further comprising:
determining a boundary of the XR user interface based on the plurality of anchor points; and
rendering the one or more interactable elements within the boundary of the XR user interface based on a linear interpolation.

5. The method of any preceding claim, wherein detecting one or more touchpoints by one or more digits of the second hand of the user on the XR user interface rendered on the first hand comprises:
determining a point-to-point distance between the distal end of one or more of the digits and a center of each of the one or more interactable elements; and
determining one of the touchpoints based on the point-to-point distance being within a point-to-point threshold value.

6. The method of any preceding claim, wherein detecting one or more touchpoints by one or more digits of the second hand of the user on the XR user interface rendered on the first hand comprises:
determining a point-to-plane distance between the distal end of one or more of the digits and a plane of the XR user interface;
determining a first time associated with a first touchpoint of the one or more touchpoints, and a second time associated with a second touchpoint of the one or more touchpoints, wherein the point-to-plane distance being within a point-to-plane threshold value from the first time to the second time; and
determining a trajectory of the second hand of the user on the one or more interactable elements based on the one or more touchpoints.

7. The method of any preceding claim, further comprising:
dividing the XR user interface into a plurality of sub-regions;
wherein rendering the XR user interface on the first hand of the user comprises rendering the plurality of sub-regions of the XR user interface on the first hand on the user based on a curvature of the first hand of the user; preferably wherein rendering the plurality of sub-regions of the XR user interface on the first hand on the user based on a curvature of the first hand of the user comprises:
dividing the first hand of the user into a plurality of hand sections according to the curvature of the first hand of the user; and
rendering each of the plurality of sub-regions of the XR user interface on each of plurality of hand sections, wherein each of the plurality of sub-regions of the XR user interface is positioned based on the first set of landmarks and additional landmarks associated with the each of the plurality of hand sections.

8. The method of any preceding claim, further comprising:
determining a skin deformation of the first hand of the user; and
detecting the one or more touchpoints by the one or more digits of the second hand of the user on the XR user interface rendered on the first hand based on the skin deformation.

9. The method of any preceding claim, wherein the XR user interface is rendered as a 2-dimensional plane.

10. The method of any preceding claim, wherein the XR user interface comprises a plurality of modes, wherein the plurality of modes comprises one or more of a numeric keypad, a keyboard, a blank touchpad, a directional pad, or a game controller;
preferably further comprising:
switching from a first mode of the plurality of modes to a second mode of the plurality of modes in response to receiving a user input.

11. The method of any preceding claim, further comprising:
determining an original text input based on the indication of the detected one or more touchpoints with the one or more interactable elements; and
generating, by a language model, a suggested text input comprising one or more of an autocorrection of the original text input, or an autofill of the original text input.

12. The method of any preceding claim, wherein the XR user interface is positioned on a palm area of the first hand of the user.

13. One or more computer-readable storage media embodying software that is operable when executed to carry out the method of any preceding claim.

14. An extended reality, XR, system comprising: one or more processors; and a memory coupled to the processors comprising instructions executable by the processors, the processors operable when executing the instructions to carry out the method of any of claims 1 to 12.

15. A computer program product comprising instructions which, when the program is executed by one or more processors of an extended reality, XR, system, cause the XR system to carry out the method of any of claims 1 to 12.
